# FASCICULE DE BREVET EUROPEEN

(11) **EP 2 756 211 B1**
(45) Date de publication et mention de la délivrance du brevet: **24.04.2019**
(21) Numéro de dépôt: 12775726.8
(22) Date de dépôt: 13.09.2012
(51) Int. Cl.: F16J 15/02, C08K 3/26, C08L 83/06, F02F 11/00

(54) **PROCEDE ET COMPOSITION UTILES POUR L'ETANCHEIFICATION ET L'ASSEMBLAGE DE COMPOSANTS D'UN GROUPE MOTO-PROPULSEUR**
VERFAHREN UND ZUSAMMENSETZUNG ZUR ABDICHTUNG UND MONTAGE VON KOMPONENTEN EINES TRIEBSTRANGS
METHOD AND COMPOSITION FOR SEALING AND ASSEMBLING COMPONENTS OF A POWER TRAIN

(30) Priorité: 16.09.2011 FR 1102816
(43) Date de publication de la demande: 23.07.2014
(73) Titulaire: ELKEM SILICONES France SAS, 69003 Lyon (FR)
(72) Inventeur: IRELAND, Tania, F-69007 Lyon (FR); SICRE, Romain, F-69190 Saint-Fons (FR)
(74) Mandataire: Mekki, Boualem
(86) Numéro de dépôt international: PCT/FR2012/000364
(87) Numéro de publication internationale: WO 2013/038076

(56) Documents cités:
- WO-A1-2010/142872
- JP-A- 2010 209 269
- US-A1- 2010 036 034
- US-B1- 6 235 832

## Description

La présente invention a pour objet une composition silicone réticulable en élastomère et un procédé utilisant la composition selon l'invention pour former des joints d'étanchéité et d'assemblage des composants d'un groupe moto-propulseur. Les élastomères silicones préparés à partir de la composition selon l'invention présentent:
- une bonne résistance au vieillissement dans des fluides agressifs chimiquement tels que ceux utilisés par exemple dans un groupe motopropulseur en l'occurrence les huiles moteur, les lubrifiants pour boîte de vitesse et pont, les mélanges huile/essence, les liquides de refroidissement, les fuels ou les liquides antigel,
- de bonnes propriétés d'adhésion même sur des surfaces polluées par des huiles utilisées dans un groupe motopropulseur, et
- de bonnes propriétés de résistance mécanique telles que la résistance à la rupture, l'allongement à la rupture et la dureté shore.

Par "liquide de refroidissement", on entend tout liquide caloporteur utilisé pour évacuer les calories d'un système mécanique ou électronique.

Les compositions silicones réticulables en élastomère pour former des joints d'étanchéité sont connues. En effet, elles conviennent en particulier pour la formation de joints d'étanchéité "in-situ", qui sont formés directement lors de l'assemblage des éléments, en particulier dans le domaine de l'automobile.

Parmi les compositions silicones réticulables en élastomère connues pour ce type d'application, celles qui réticulent dès la température ambiante forment une catégorie qui attire toute l'attention car elles ne nécessitent pas la mise en place de four consommateur d'énergie.

Ces compositions silicones sont classées en 2 groupes distincts: les compositions monocomposantes (RTV-1) et les compositions bi-composantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomère.

Généralement, les compositions monocomposantes (RTV-1) réticulent quand elles sont exposées à l'humidité de l'air. Le plus souvent, la cinétique des réactions de polycondensation est extrêmement lente; ces réactions sont donc catalysées par un catalyseur approprié.

De plus, face à une industrie du transport en pleine évolution, on voit apparaître de nouvelles contraintes liées à l'augmentation des rendements moteurs, à l'augmentation des températures de fonctionnement, à la diminution de la consommation en carburant et à la diminution de la fréquence d'entretien.

Ainsi, les formulateurs de fluides motopropulseurs (huile moteur, lubrifiant pour boite de vitesse et pont, mélange huile/essence, liquide de refroidissement, fuel ou liquide antigel) continuent d'améliorer les performances de ces produits par l'addition d'additifs de plus en plus efficace. La quantité d'additifs incorporée dans ces produits augmente de plus en plus, ce qui a pour effet d'augmenter leur agressivité chimique vis à vis des organes souples, par exemple les joints d'étanchéité, présents dans les dispositifs dans lesquels ces produits sont utilisés.

La demande de brevet JP-A-2009197188 décrit des compositions silicones ayant une bonne résistance au contact des différents fluides utilisés dans un groupe motopropulseur mais ces compositions comprennent des huiles réticulables complexes et coûteuses qui contiennent une rotule alkylène en C1 à C5 et représenté par le symbole Y dans les formules suivantes :

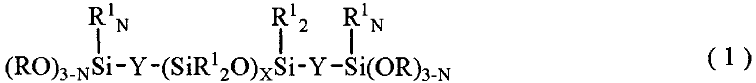

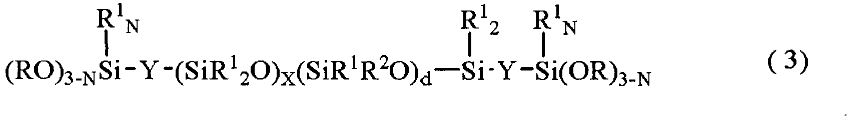

La demande de brevet JP-A-2010209269 décrit également des compositions silicones ayant une bonne résistance aux huiles. Il existe donc un besoin croissant pour trouver de nouvelles compositions silicones utiles pour former des joints d'étanchéité et d'assemblage des composants d'un groupe moto-propulseur, même sur des surfaces polluées par des huiles.

Ainsi, un des objectifs essentiels de la présente invention est de proposer de nouvelles compositions d'organopolysiloxanes durcissant en un élastomère silicone en présence d'eau ou d'humidité utiles pour l'étanchéification et l'assemblage des éléments d'un groupe moto-propulseur.

Un autre objectif est de proposer un nouveau procédé d'étanchéification et d'assemblage de composants d'un groupe moto-propulseur au moyen de joints silicones ayant une bonne résistance au contact des différents fluides utilisés dans un groupe motopropulseur tout en ayant de bonnes propriétés d'adhésion.

Ces objectifs, parmi d'autres, sont atteints par la présente invention qui concerne une composition polyorganosiloxane **X** réticulable en élastomère en présence d'eau par des réactions de polycondensation comprenant:
A) au moins un polyorganosiloxane **A** comprenant au moins un groupement alcoxylé et constitué de motifs siloxyles identiques ou différents, de formule :

   (Z)_{b}(R⁴)ₐSiO_{[4-(a+b)]/2} **(1)**

   dans laquelle :
   - le symbole Z = [-(OCH₂CH₂)_{c}-OR⁵], avec c=0 ou 1,
   - a= 0, 1, 2 ou 3; b= 0, 1, 2 ou 3, a+b= 0, 1, 2 ou 3,
   - le symbole R⁴ représente un radical monovalent hydrocarboné en C₁ à C₁₃,
   - le symbole R⁵ représente un radical monovalent hydrocarboné en C₁ à C₆ ou un radical alkoxyalkyle comprenant éventuellement une fonction ester, et
   - avec la condition que pour au moins un motif siloxyle l'indice b≥1 de manière à ce que le polyorganosiloxane **A** contienne au moins un groupement alcoxylé Z,
B) une quantité strictement supérieure à 35% en poids par rapport à la quantité totale de la composition d'au moins un carbonate de calcium naturel broyé **B** qui a une surface spécifique strictement inférieure à 3 m²/g, mesurée selon la méthode BET et a été traité en surface par au moins un composé choisi parmi le groupe constitué par : une paraffine, un acide gras, un sel d'un acide gras et leur mélange,
C) une quantité catalytiquement efficace d'au moins un catalyseur de condensation **C** qui est une guanidine ayant une fonction imine substituée par un atome autre que l'atome d'hydrogène répondant aux formules générales **(I)** ou (II) suivantes : 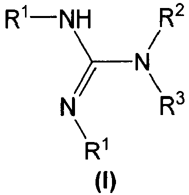 dans laquelle :
   - les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
   - le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine,
   - le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine, et
   - lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, 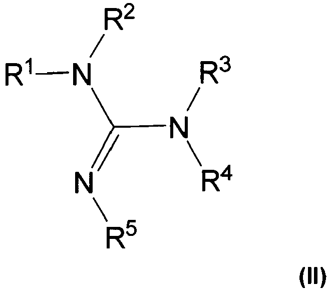
   dans laquelle :
   - les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine, et
   - les radicaux R¹, R², R³ ou R⁴ peuvent être liés deux à deux de manière à former un cycle aliphatique à 3, 4, 5, 6 ou 7 chaînons éventuellement substitué par un ou plusieurs substituants,
D) au moins un polyalcoxysilane **D** ayant au moins un groupement comprenant au moins un atome d'azote,
E) éventuellement au moins une charge **E** autre que ledit carbonate de calcium naturel broyé **B**,
F) éventuellement au moins un additif **F** tel qu'une base colorante, un pigment ou un agent thixotropant, et
avec la condition supplémentaire que ladite composition polyorganosiloxane **X** ne contient pas de noir d'acétylène.

Pour atteindre cet objectif, la Demanderesse a eu le mérite de mettre en évidence, de manière tout à fait surprenante et inattendue, que l'utilisation d'une quantité judicieusement choisie d'un carbonate de calcium naturel ayant des caractéristiques spécifiques, notamment en terme de surface spécifique et de traitement de surface, associé à un catalyseur de type guanidine et à un promoteur d'adhérence polyacoxylé et aminé permet de préparer des joints assurant l'étanchéification et l'assemblage, de composants ou d'éléments utilisés dans un groupe moto-propulseur. Ces joints présentent alors l'avantage d'avoir des propriétés de collage remarquable, notamment en terme de profil cohésif, et ceci même sur des surfaces réputées pour leur difficultés de collage telles que par exemple des supports en aluminium pollués par des huiles moteurs. De plus, les élastomères silicones préparés à partir de la composition selon l'invention présentent l'avantage de maintenir de bonnes propriétés mécaniques même lorsqu'ils sont en contact prolongé avec des fluides agressifs sur le plan chimique tels que ceux utilisés par exemple dans un groupe motopropulseur. Comme exemple de fluides agressifs sur le plan chimique on peut citer par exemple: les huiles pour moteur, les lubrifiants pour boite de vitesse et pont, les mélanges huiles/essence, les liquides de refroidissement, les fuels et les liquides antigel.

Le carbonate de calcium naturel broyé **B** selon l'invention est préparé, par exemple, à partir de la craie, la calcite, le marbre ou à partir de leur mélange.

Le terme « carbonate de calcium naturel » est à différencier d'un carbonate de calcium synthétique obtenu par voie chimique plus connu sous le terme de « carbonate de calcium précipité».

De préférence la quantité de carbonate de calcium naturel broyé **B** ajoutée à la composition est comprise entre 37 et 50 parties en poids par rapport au poids total de la composition selon l'invention.

De préférence, le carbonate de calcium naturel broyé **B** a une surface spécifique strictement inférieure à 3 m²/g, mesurée selon la méthode BET et a été traité en surface par au moins un acide gras contenant de 10 à 24 atomes de carbone ou son sel respectif choisi parmi les sels de calcium, magnésium, zinc ou leur mélange et de préférence a été traité en surface par un acide stéarique ou son sel respectif de calcium, magnésium ou zinc.

De préférence, le polyorganosiloxane réticulable **A** est linéaire et a pour formule développée: 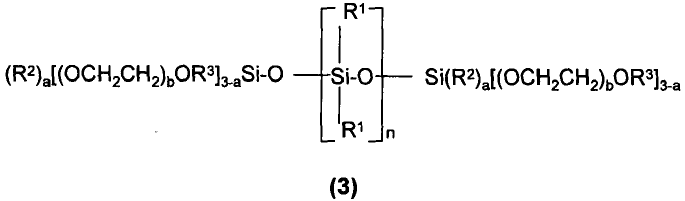 dans laquelle :
- les substituants R¹, identiques ou différents, représentent chacun un radical monovalent hydrocarboné saturé ou non en C₁ à C₁₃, substitué ou non substitué, aliphatique, cyclanique ou aromatique ;
- les substituants R², identiques ou différents, représentent chacun un radical monovalent hydrocarboné saturé ou non en C₁ à C₁₃, substitué ou non substitué, aliphatique, cyclanique ou aromatique ;
- les substituants R³, identiques ou différents, représentent chacun un radical alkyle, linéaire ou ramifié, en C₁ à C₆ ;
- n a une valeur suffisante pour conférer au polyorganopolysiloxane de formule A une viscosité dynamique à 25°C allant de 1.000 à 1.000.000 mPa.s ; et
- l'indice a est égal à zéro ou 1 et l'indice b est égal à zéro ou 1;

Selon un autre mode de réalisation préféré, le polyorganosiloxane **A** comprenant au moins un groupement alcoxylé est obtenu en faisant réagir, éventuellement in-situ, en présence d'une quantité catalytiquement efficace d'au moins un catalyseur **G** de fonctionnalisation:
a) au moins un polyorganosiloxane **A'** comprenant des motifs siloxyles de formule :

   (R¹)ₓ(OH)_{y}SiO_{(4-x-y)//2} **(4)**

   dans laquelle :
   - x+y= 0, 1, 2 ou 3 ;
   - les substituants R¹, identiques ou différents, représentent chacun un radical monovalent hydrocarboné en C₁ à C₃₀ et choisi parmi le groupe constitué par les radicaux alkyles, cycloalkyles, aryles, alkaryles et aralkyles, et
   - au moins deux motifs siloxyles comprenant un groupement ≡SiOH sont présents dans le polyorganosiloxane **A'**, avec
b) au moins un silane polyalcoxylé **H** de formule :

   (R²)_{z}Si(OR³)_{(4-Z)} **(5)**

   dans laquelle :
   - z = 0 ou 1,
   - le symbole R² représente un radical monovalent hydrocarboné en C₁ à C₁₃, et
   - les symboles R³, identiques ou différents, représentent chacun un radical monovalent hydrocarboné en C₁ à C₆ ou un radical alkoxyalkyle présentant éventuellement une fonction ester,

De préférence le catalyseur **G** de fonctionnalisation est la lithine (ou hydroxyde de lithium) ou la potasse. La lithine se trouve largement dans le commerce. De préférence elle est utilisée en solution dans un alcool, tel que par exemple du méthanol ou de l'éthanol.

La préparation de polyorganosiloxane comprenant des groupements alcoxylés par fonctionnalisation est décrite par exemple dans la demande de brevet français n° FR2638752-A1.

Selon un autre mode de réalisation préféré, le polyorganosiloxane **A'** est de préférence un polymère α,ω-dihydroxypolydiorganosiloxane, de viscosité comprise entre 50 et 5 000 000 mPa.s à 25°C.

Des exemples de polyalcoxysilane **D** ayant au moins un groupement comprenant au moins un atome d'azote » sont par exemple ceux de formules **(6)** suivante :

(R⁵)_{z}Si(OR⁴)_{(4-z)} **(6)**

dans laquelle :
- z = 1 ou 2,
- le symbole R⁵ représente un groupement ou radical comprenant au moins un atome d'azote, et
- les symboles R⁴, identiques ou différents, représentent chacun un radical monovalent hydrocarboné en C₁ à C₆ ou un radical alkoxyalkyle présentant éventuellement une fonction ester.

Comme exemples de polyalcoxysilane **D** ayant au moins un groupement comprenant au moins un atome d'azote et utiles selon l'invention, on peut citer les composés suivants :

[H₂N(CH₂)₃]Si(OCH₂CH₂CH₃)₃,

[H₂N(CH₂)₃]Si(OCH₃)₃

[H₂N(CH₂)₃]Si(OC₂H₅)₃

[H₂N(CH₂)₄]Si(OCH₃)₃

[H₂NCH₂CH(CH₃)CH₂CH₂]SiCH₃(OCH₃)₂

[H₂NCH₂]Si(OCH₃)₃

[n-C₄H₉-HN-CH₂]Si(OCH₃)₃

[H₂N(CH₂)₂NH(CH₂)₃]Si(OCH₃)₃

[H₂N(CH₂)₂NH(CH₂)₃]Si(OCH2CH₂OCH₃)₃

[CH₃NH(CH₂)₂NH(CH₂)₃]Si(OCH₃)₃

[H(NHCH₂CH₂)₂NH(CH₂)₃]Si(OCH₃)₃

HS(CH₂)₃Si(OCH₃)₃

NH2CONH2(CH₂)₃Si(OCH₃)₃

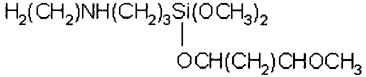

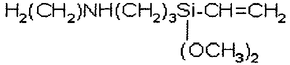

De préférence, le polyalcoxysilane **D** sera présent dans la composition dans des quantités comprises entre 0,1 et 5 parties en poids par rapport au poids total de la composition.

Il est entendu que des promoteurs d'adhésion classiques peuvent aussi être ajoutés à la composition selon l'invention tels que des silanes polyalcoxylés **H** autres que le polyalcoxysilane **D**. Ce sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Comme exemples de silanes polyalcoxylés **H**, on peut citer ceux de formule:

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH₂]

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃

3-glycidoxypropyl-triméthoxysilane (GLYMO), et
méthacryloxypropyltriméthoxysilane (MEMO).

L'introduction d'une charge **E** a pour but de conférer, lorsque cela est nécessaire, de bonnes caractéristiques mécaniques et rhéologiques aux élastomères découlant du durcissement des compositions conformes à l'invention. On utilise, par exemple, des charges minérales très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, un carbonate de calcium autre que ledit carbonate de calcium naturel broyé **B**, celui-ci pouvant éventuellement être traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g. Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g. Ces charges peuvent avoir été traitées en surface. De préférence on ajoutera de 0,1 à 10 parties en poids de cette charge **E** par rapport au poids total de la composition.

Le catalyseur de condensation **C** selon l'invention est une guanidine ayant une fonction imine substituée par un atome autre que l'atome hydrogène et répondant aux formules générales (I) ou (II) telles que définies précédemment. On entend par l'expression imine substituée une fonction >C=N-R avec R différent d'un atome d'hydrogène. Le catalyseur de condensation **C** selon l'invention est ajouté à la composition dans des quantités généralement comprises entre 0,1 et 5 parties en poids par rapport au poids total de la composition, et plus préférentiellement comprises entre 0,1 et 1 parties en poids par rapport au poids total de la composition.

Les guanidines de formule **(I)** sont des guanidines 1,2,3-trisubstituées et 1,2,3,3-tétrasubstituées et présentent l'avantage d'être liquides, incolores, inodores et solubles dans les matrices silicones. Des exemples de ce type de catalyseurs sont décrits dans la demande de brevet internationale WO2009/118307.

De préférence on utilisera les catalyseurs **(A1)** à **(A6)** suivants:

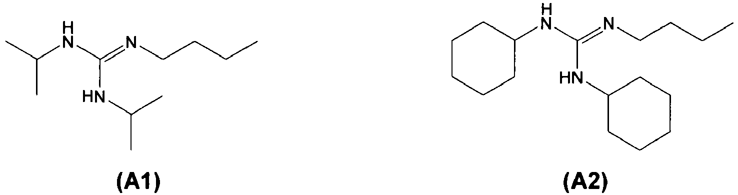

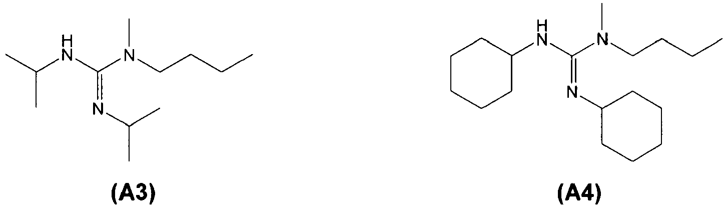

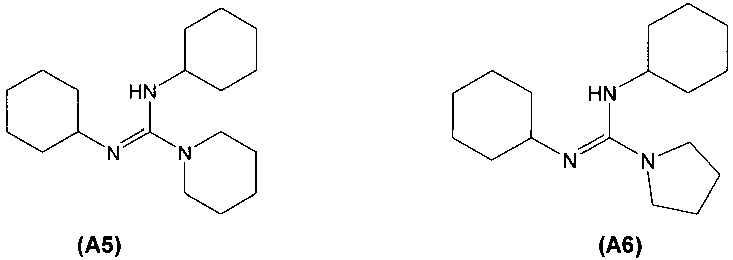

Les guanidines de formule **(II)** sont des guanidines pentasubstituées et présentent l'avantage d'être liquides, incolores, inodores et solubles dans les matrices silicones.

Selon un mode de réalisation particulier, les composés **(A7)** à **(A9)** suivants sont préférés:

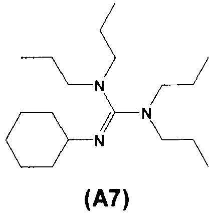

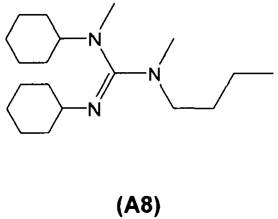

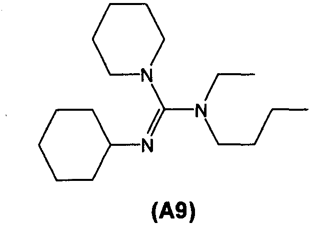

Ils sont par exemple décrits dans la demande de brevet français n° FR-0806610 déposé le 25 novembre 2008.

Comme exemple d'agent thixotropant on peut citer :
- les épaississants inorganiques, l'acide borique et les borates, les titanates, les aluminates, les zirconates ;
- les composés portant des groupements hydroxyles ;
- les composés à base de polyéthylène et/ou polypropylène ;
- les composés comprenant des fonctions amines cycliques ;
- les composés de type polyéther ou comprenant des groupements polyéther, et
- les résines fluorées, de préférence à base de polyfluoroéthylène (PFE) et plus préférentiellement encore à base de polytétrafluoroéthylène (PTFE ou téflon®).

Un autre objet de l'invention concerne un élastomère obtenu par réticulation en présence d'eau de la composition polyorganosiloxane **X** selon l'invention et telle que définie ci-dessus.

Un autre objet de l'invention concerne l'utilisation de la composition polyorganosiloxane **X** selon l'invention et telle que définie ci-dessus ou de l'élastomère selon l'invention et tel que défini ci-dessus pour préparer des joints silicones d'étanchéité ayant une bonne ayant une bonne adhérence sur des surfaces polluées par des huiles d'un groupe motopropulseur.

Enfin le dernier objet selon l'invention concerne un procédé d'étanchéification et d'assemblage d'au moins un composant d'un groupe moto-propulseur comprenant les étapes a) à d) suivantes:
a) on prépare une composition polyorganosiloxane **X** selon l'invention et telle que définie ci-dessus,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité, et
d) on assemble ledit composant à un autre composant du groupe moto-propulseur de manière à ce que le joint formé assure l'assemblage et l'étanchéité entre les deux composants du groupe moto-propulseur.

Dans le domaine de l'automobile, les élastomères silicones sont souvent utilisés sous la forme de joints silicones. Le terme "joints silicones" englobent plusieurs types de joints d'étanchéités, à savoir les joints "flués" (JF) également appelés joints écrasés et les joints profilés sur pièce (JPP) également appelés "joints en forme".

Les joints "flués" (JF) sont généralement formés à la suite de l'application d'un cordon pâteux des compositions sur la zone de contact entre 2 éléments métalliques ou plastiques à assembler. Le cordon pâteux est d'abord déposé sur l'un des éléments puis l'autre élément est appliqué sur le premier; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "profilés sur pièce" (JPP) sont utilisés en particulier dans le secteur du transport et de l'automobile, pour des applications d'étanchéité sur toutes les pièces moteur exigeant une démontabilité telles à titre d'exemples, le couvre culasse, pompe à huile, pompe à eau, boîte à eau, carter d'huile, carter de distribution, guide d'embrayage. Les "joints profilés sur pièce" (JPP) sont généralement formés à la suite de l'application d'un cordon pâteux des compositions sur la zone de contact entre 2 éléments à assembler. Toutefois, après la dépose du cordon pâteux sur l'un des éléments on laisse réticuler le cordon en élastomère puis on applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère élastomérique, épouse les irrégularités des surfaces à jointoyer de ce fait, il est inutile d'usiner soigneusement les surfaces devant être mises en contact les unes avec les autres et de serrer avec force les assemblages obtenus. Ces particularités permettent de supprimer dans une certaine mesure, les joints de fixation, des entretoises, des nervures destinées habituellement à raidir et renforcer les éléments d'assemblages. Le "joint profilés sur pièce" est généralement un cordon fermé d'élastomère silicone de section ovoïde déposé selon un profil bien défini et devant assurer l'étanchéité de deux (ou plusieurs) pièces démontables.

Comme les compositions utilisées dans le procédé selon l'invention durcissent rapidement à température ambiante et même en milieu confiné, il en résulte que les joints d'étanchéité silicones découlant du durcissement de ces compositions peuvent être préparés dans des conditions de fabrication industrielle très contraignantes. Ils peuvent, par exemple, être fabriqués sur les chaînes de montage usuelles de l'industrie automobile munies d'un appareil automatique de dépose des compositions. Cet appareil automatique possède bien souvent une tête mélangeuse et une buse de dépose, celle-ci se déplaçant selon le profil des joints à fabriquer. Les compositions, fabriquées et distribuées au moyen de cet appareil ont de préférence une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boîtes à vitesses, d'entretoises de distribution et même de carters d'huile.

Le composant peut être de nature diverse et variée est en verre, en aluminium, en plastique ou en métal.

Selon un autre mode de réalisation particulier du procédé selon l'invention le composant du groupe moto-propulseur est choisi parmi le groupe constitué par: une culasse, un carter d'huile, un couvre-culasse, un carter de distribution, un barreau de palier, un bloc cylindre moteur, une boîte de vitesses, une pompe à eau, un boîtier de réaspiration des gaz carter, un filtre à eau, un filtre à huile, une pompe à huile, un boitier comprenant des composants électroniques d'un groupe moto-propulseur ou un carter d'embrayage.

De manière générale, on applique la composition silicone sur le composant soit sous la forme de joint continu ou discontinu, soit sous la forme de couche continue ou discontinue, Pour former une couche continue ou discontinue, on peut utiliser les techniques de dépose ou d'enduction classiques.

Après le dépôt des compositions telles quelles, sur des substrats solides, en atmosphère humide, on constate qu'un processus de durcissement en élastomère se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Des bases monocomposantes sont décrites en détail par exemple dans les brevets EP 141 685, EP 147 323, EP 102 268, EP 21 859, FR 2 121 289 et FR 2 121 631, cités en référence.

D'autres avantages et caractéristiques de la présente invention apparaîtront à la lecture des exemples suivants donnés à titre illustratif nullement limitatif.

### EXEMPLES

### I) Composants des différentes formulations

Catalyseur 51015 : solution d'hydroxyde de lithium hydraté dans le méthanol
VTMO : Vinyltrimethoxysilane
MEMO : γ-methacryloxypropyltrimethoxysilane
DAMO : N-β-(aminoethyl)-γ-aminopropyltriméthoxysilane
AMEO : 3-aminopropyltriethoxysilane
Tyzor® PITA : (iPrO)₂Ti(Ethylacetoacetate)₂ (fournisseur Dupont)
Tyzor® PITA SM: mélange de 80% de (iPrO)₂Ti(Ethylacetoacetate)₂ et de 20% de Méthyltriméthoxysilane (fournisseur Dupont)
TnBT : tetrabutoxytitanate
Silice A150 : silice pyrogénée (surface spécifique 150 m²/g)
Silice AE55 : silice pyrogénée traitée avec de l'octamethyltetrasiloxane
BLR®3 : carbonate de calcium broyé traité avec un acide gras (fournisseur Omya)
Omyabond® 520FL : carbonate de calcium broyé traité avec un acide gras (acide stéarique, fournisseur Omya)
Hakuenka® CCRS : carbonate de calcium précipité traité acide gras (fournisseur Shiraishi)
Sifraco ou Sikron® C600 : quartz broyé (fournisseur Sibelco)

Produits préparés DiCyG: N,N-dicyclohexyl-N'-methyl-N"-butylguanidine ou 1-butyl-2,3-dicyclohexyl-1-méthylguanidine:

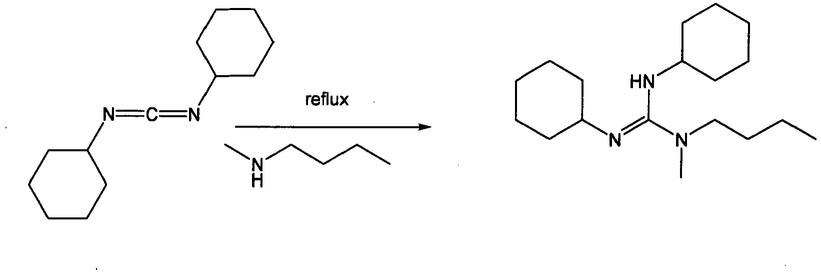

Un mélange de 17.78 g de N-butyl-N-méthylamine (0,204 mol) et de 21.05 g de dicyclohexylcarbodiimide (0,102 mol) est chauffé à reflux 3h. L'analyse par CPG montre alors une conversion supérieure à 99.5 % de la dicyclohexylcarbodiimide. Le mélange final incolore est concentré à 60°C sous 1 mbar pendant 2 h pour donner 29.9 g d'un liquide incolore et pratiquement inodore moyennement visqueux, correspondant à la guanidine attendue (rendement 99.7 %).
RMN ¹H/CDCl₃ (ppm) : 0.89 (3 H, t), 1-1.4 (10 H, m), 1.47 (2 H, quint), 1.5-2 (12 H, plusieurs m), 2.67 (3 H, s), 2.90 (1 H, m), 2.97 (1 H, m), 3.06 (2 H, t).

### II) Nature de la charge de bourrage

Nous avons étudié l'influence de la nature de la charge de bourrage. Le tableau suivant présente les caractéristiques des différentes charges de bourrage utilisées. La surface spécifique est mesurée par la méthode BET.

**Tableau 1 : Caractéristiques des différentes charges de bourrage utilisées**

| **Charge de bourrage** | **Nature charge** | **Traitement** | **Surface spécifique (m²/g)** | **D50 (µm)** |
|---|---|---|---|---|
| **BLR®3** | CaCO₃ naturel broyé | Acide gras | 2 | 6,5 |
| **Omyabond® 520FL** | CaCO₃ naturel broyé | Acide gras | 2 | 2 |
| **Hakuenka® CCRS** | CaCO₃ précipité | Acide gras | 15-17 | 0,08 |
| **Sikron® C600** | Quartz broyé | Non traité | 1.8 | 1,8 |

### Exemple1

Dans un mélangeur équipé d'un mobile d'agitation de type « papillon » sont introduits 620 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéisation à 400 t/mn. Puis 36 g de silice pyrogénée, traitée octamethyltétracyclosiloxane, sont incorporés à vitesse d'agitation modérée de 160t/mn puis dispersés pendant 4 minutes à 400 t/mn. De la même façon, 480 g de carbonate de calcium BLR®3 sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 7,2 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

### Exemple2

Dans un mélangeur équipé d'un mobile d'agitation de type « papillon » sont introduits 620 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéïsation à 400 t/mn. Puis 36 g de silice pyrogénée, traitée octamethyltétracyclosiloxane, sont incorporés à vitesse d'agitation modérée de 160t/mn puis dispersée pendant 4 minutes à 400 t/mn. De la même façon , 480 g de carbonate de calcium Omyabond® 520FL sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 7,2 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

### Contre-exemplel

Dans un mélangeur équipé d'un mobile d'agitation de type « papillon » sont introduits 620 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéisation à 400 t/mn. Puis 36 g de silice pyrogénée, traitée octamethyltétracyclosiloxane, sont incorporés à vitesse d'agitation modérée de 160t/mn puis dispersée pendant 4 minutes à 400 t/mn. De la même façon, 480 g de carbonate de calcium Hakuenka® CCRS sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 7,2 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

### Contre-exemple2

Dans un mélangeur équipé d'un mobile d'agitation de type « papillon » sont introduits 620 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéisation à 400 t/mn. Puis 36 g de silice pyrogénée, traitée octamethyltétracyclosiloxane, sont incorporés à vitesse d'agitation modérée de 160t/mn puis dispersée pendant 4 minutes à 400 t/mn. De la même façon, 480 g de quartz broyé Sikron® C600 sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 7,2 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

L'évaluation des propriétés de chacune des formulations préparées se fait de la façon suivante.

### Evaluation des propriétés mécaniques des produits

Des joints sous forme de films de 2 mm d'épaisseur sont préalablement mis à réticuler à 23°C et à 50 % d'hygrométrie pendant 7 jours. Des éprouvettes sont alors découpées dans le film afin de mesurer les propriétés mécaniques de l'élastomère formé.
- La dureté Shore A (DSA) est mesurée à partir de 3 carrés de 2 mm d'épaisseur superposés selon la norme DIN 53505,
- La résistance à la rupture (R/R) en MPa est mesurée à partir d'éprouvettes H2 selon la norme AFNOR NF T 46002, ainsi que l'allongement à la rupture (A/R) en % et le module élastique (Module à 100%) en MPa.

### Test d'évaluation des propriétés d'adhérence par traction-cisaillement

Un joint parallèpipède d'élastomère silicone de 1mm d'épaisseur est appliqué entre deux stérigmes en aluminium AG3. L'éprouvette ainsi obtenue après 14 jours de réticulation à 23°C+/2 et 50% d'humidité relative +/-5 est soumise à une sollicitation en traction-cisaillement. Le collage est caractérisé par la contrainte à la rupture (MPa) et le type de rupture (% pourcentage de profil cohésif). Une rupture à haut profil cohésif est recherchée. Les éprouvettes en aluminium de qualité AluAG3 sont préalablement grattées afin d'éliminer la couche d'oxyde puis nettoyées au solvant et séchées.
Pour l'évaluation des propriétés d'adhérence sur AluAG3 pollué d'huile moteur, les stérigmes sont immergés, avant application du joint silicone, dans une solution d'huile moteur dans de l'heptane puis retirées et séchées à l'air jusqu'à obtention d'une fine couche d'huile résiduelle à l'endroit de l'application. Le collage est de nouveau caractérisé par la contrainte à la rupture (MPa) et le type de rupture (% pourcentage de profil cohésif). Une rupture à haut profil cohésif est recherchée.

### Evaluation de la résistance aux huiles moteur

Des joints sous forme de films de 2 mm d'épaisseur sont préalablement mis à réticuler à 23°C et à 50 % d'hygrométrie pendant 14 jours. Des éprouvettes, carrés et éprouvettes H2 sont alors découpées dans le film afin de mesurer les propriétés mécaniques de l'élastomère formé. Les éprouvettes sont ensuite placées dans un flacon et immergées dans de l'huile moteur Elf diesel Evolution 5W30. Les flacons sont ensuite stockés 3 jours à 150°C. Après refroidissement, les éprouvettes sont retirées et délicatement essuyées avec un tissu en papier puis sont mesurées :
- la dureté Shore A (DSA) à partir de 3 carrés de 2 mm d'épaisseur superposés selon la norme DIN 53505,
- la résistance à la rupture (R/R) en MPa à partir d'éprouvettes H2 selon la norme AFNOR NF T 46002, ainsi que l'allongement à la rupture (A/R) en % et le module élastique (Module à 100%) en MPa
- le gonflement par pesée avant et après traitement dans l'huile avec gonflement(%)=100*(m^{huile}-m^{initial})/(m^{initial})

Le Tableau 2 suivant présente les propriétés mesurées pour chacune des formulations préparées.

**Tableau 2 : Influence de la nature de la charge de bourrage sur les propriétés d'adhérence de formulations RTV1 alcoxy**

| **Charges (%poids)** | **Exemple 1 selon l'invention** | **Exemple 2 selon l'invention** | **Contre-exemple1** | **Contre-exemple2** |
|---|---|---|---|---|
| **AE55** | 3 | 3 | 3 | 3 |
| **BLR®3** | 40 | | | |
| **Omyabond® 520FL** | | 40 | | |
| **Hakuenka® CCRS** | | | 40 | |
| **Sikron® C600** | | | | 40 |

| **Propriétés mécaniques après 7 j de réticulation à 23°C+/-2 et 50% HR +/-5** | | | | |
|---|---|---|---|---|
| **Dureté Shore A** | 37 | 38 | 52 | 48 |
| **RR (MPa)** | 1,15 | 1,89 | 3,15 | 3,86 |
| **AR (%)** | 226 | 302 | 290 | 266 |
| **M100 (MPa)** | 0,91 | 0,99 | 1,56 | 1,88 |

| **Propriétés mécaniques après traitement dans huile Elf diesel evolutin 5W30 pendant 3 j à 150°C** | | | | |
|---|---|---|---|---|
| **Dureté Shore A** | 20 | 19 | 29 | 17 |
| **RR (MPa)** | 0,74 | 1,0 | 2,4 | 1,26 |
| **AR (%)** | 247 | 283 | 305 | 320 |
| **M100 (MPa)** | 0,44 | 0,47 | 0,95 | 0,47 |

| **Propriétés de collages de 1 mm d'epaisseur en traction-cisaillement sur Alu AG3 non pollué d'huile** | | | | |
|---|---|---|---|---|
| **RR (MPa)** | 0,6 | 0,8 | 1,1 | 1,5 |
| **Cohésion (%)** | 100 | 97 | 63 | 98 |

| **Propriétés de collages de 1mm d'épaissuer en traction-cisaillement sur Alu AG3 pollué d'huile** | | | | |
|---|---|---|---|---|
| **RR (MPa)** | 0,6 | 0,8 | 0,6 | 0,7 |
| **Cohésion (%)** | **83** | **40** | **0** | **0** |

Seules les formulations contenant du carbonate de calcium selon l'invention (exemples 1 et 2) permettent d'obtenir un profil cohésif sur aluminium AG3 pollué d'huile moteur.

### III) Teneur en carbonate de calcium naturel broyé B selon l'invention

Nous avons étudié l'influence de la teneur de la charge de bourrage selon l'invention (carbonate de calcium naturel broyé B).

### Exemple 3

Dans un mélangeur équipé d'un mobile d'agitation de type « papillon » sont introduits 560 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéisation à 400 t/mn. Puis 36 g de silice pyrogénée sont incorporés à vitesse d'agitation modérée de 160t/mn puis dispersée pendant 4 minutes à 400 t/mn. De la même façon, 540 g de carbonate de calcium BLR®3 sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 7,2 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

### Contre-exemple 3

Dans un mélangeur équipé d'un mobile d'agitation de type « papillon » sont introduits 746 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéisation à 400 t/mn. Puis 96 g de silice pyrogénée sont incorporés à vitesse d'agitation modérée de 160t/mn puis dispersée pendant 4 minutes à 400 t/mn. De la même façon, 300 g de carbonate de calcium BLR®3 sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 3,6 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

### Contre-exemple 4

Dans un mélangeur équipé d'un mobile d'agitation de type « papillon » sont introduits 650 g d'huile polydiméthylsiloxane α,ω-dihydroxylée contenant 0,06% en poids de groupements hydoxyle OH et 48g de vinyltrimethoxysilane. Ce mélange est homogénéisé par rotation du « papillon » à 200t/mn pendant 2 minutes. Le catalyseur de fonctionnalisation, 2,4 g d'une solution méthanolique de lithine hydratée est alors ajouté, suivi d'une phase d'homogénéisation à 400 t/mn. Puis 66 g de silice pyrogénée sont incorporés à vitesse d'agitation modérée de 160t/mn puis dispersée pendant 4 minutes à 400 t/mn. De la même façon, 420 g de carbonate de calcium BLR®3 sont incorporés. Le milieu subit ensuite une phase de dégazage sous vide partiel de 50 mbar et sous agitation à 130 t/mn puis 6 g de N-β-(aminoethyl)-γ-aminopropyltriméthoxysilane et 7,2 g de N,N-dicyclohexyl-N'-methyl-N"-butylguanidine sont ajoutés sous azote et dispersés à 400 t/mn. Le milieu subit une deuxième phase de dégazage sous 40 mbar et sous agitation à 130 t/mn. Enfin le mélange est transféré en cartouches plastiques fermées, à l'abri de l'humidité de l'air.

Le tableau suivant présente les propriétés mesurées pour chacune des formulations préparées selon les tests d'évaluation décrits précédemment

**Tableau 3. Influence de la teneur en charge sur les propriétés d'adhérence des formulations RTV1 alcoxy**

| **Charges (%poids)** | **Contre-exemple 3** | **Contre-exemple 4** | **Exemple 3 selon l'invention** | **Exemple 1 selon l'invention** |
|---|---|---|---|---|
| **Silice A150** | 8 | 3,5 | 3 | |
| **Silice AE55** | | | | 3 |
| **BLR®3** | **25** | **35** | **45** | **40** |

| **Propriétés mécaniques après 7 j de réticulation à 23°C+/-2 et 50% HR +/-5** | | | | |
|---|---|---|---|---|
| **Dureté Shore A** | 48 | 42 | 42 | 37 |
| **RR (MPa)** | 3,0 | 1,6 | 1,2 | 1,15 |
| **AR (%)** | 390 | 319 | 208 | 226 |

| **Propriétés mécaniques après traitement dans huile Elf diesel evolution 5W30 pendant 3 j à 150°C** | | | | |
|---|---|---|---|---|
| **Dureté Shore A** | 32 | 19 | 26 | 20 |
| **RR (MPa)** | 1,56 | 0,8 | 0,86 | 0,74 |
| **AR (%)** | 360 | 414 | 222 | 247 |
| **Gonflement (%)** | 6 | 14 | 10 | / |

| **Propriétés de collages de 1 mm d'epaisseur en traction-cisaillement sur Alu AG3 non pollué d'huile** | | | | |
|---|---|---|---|---|
| **RR** | 1,1 | 0,8 | 0,7 | 0,6 |
| **Cohésion (%)** | 98 | 97 | 93 | 100 |

| **Propriétés de collages de 1 mm d'epaisseur en traction-cisaillement sur Alu AG3 pollué d'huile** | | | | |
|---|---|---|---|---|
| **RR (Mpa)** | 06 | 0,5 | 0,7 | 0,6 |
| **Cohésion (%)** | **0** | **0** | 43 | 83 |

Les résultats montrent que l'ajout d'une teneur minimale en carbonate de calcium naturel broyé selon l'invention est nécessaire pour obtenir un profil cohésif sur une surface polluée d'huile moteur. Ainsi seules les formulations contenant plus de 35 % poids du carbonate de calcium broyé BLR®3, selon l'invention, dans la formulation permettent d'obtenir la cohésion sur une surface polluée d'huile moteur. Les meilleures propriétés d'adhérence sur surface polluée sont observées pour la formulation contenant 40 % poids de BLR®3. Les « % poids » du Tableau 3 correspondent à des % poids par rapport au poids total de la composition.

### IV) Système catalytique et promoteur d'adhérence

Nous avons fait varier les systèmes catalyseur-promoteur d'adhérence comme détaillé dans les exemples et contre-exemples suivants.

### Préparation 1

Dans un mélangeur équipé d'un mobile d'agitation de type « papillon » sont introduits 522 g d'huile polydiméthylsiloxane α,ω-dihydroxylée contenant 0,04% en poids de groupements hydoxyle OH, 64 g d'une résine silicone contenant 1,1% en poids de OH, 172 g d'un mélange d'huile polydiméthylsiloxane à bout de chaînes triméthylsilyle de viscosité 100 mPa.s et 1000000 mPa.s et 52 g de vinyltrimethoxysilane. Ce mélange est homogénéisé par rotation du « papillon » à 200t/mn pendant 2 minutes. Le catalyseur de fonctionnalisation, 9,5 g d'une solution méthanolique de lithine hydratée est alors ajouté, suivi d'une phase d'homogénéisation à 400 t/mn. Puis 78 g de silice pyrogénée sont incorporés à vitesse d'agitation modérée de 160t/mn puis dispersée pendant 4 minutes à 400 t/mn. De la même façon, 626 g de carbonate de calcium BLR®3 sont incorporés. Après agitation, 4,9 g d'un additif thixotropant sont ajoutés. Le milieu subit ensuite une phase de dégazage sous vide partiel de 50 mbar et sous agitation à 130 t/mn.

### Exemple 5 et contre-exemples 5 à 9

Dans les proportions spécifiées dans le tableau 4 suivant différents catalyseurs et promoteurs d'adhérence sont ajoutés à la préparation 1 sous atmosphère inerte puis mélangés. Le milieu subit ensuite une phase de dégazage sous 40 mbar. Le mélange est ensuite transféré en cartouches plastiques fermées, à l'abri de l'humidité de l'air. Chaque formulation est soumise aux tests d'évaluation décrits précédemment. Les résultats sont présentés dans le tableau 4 suivant.

**Tableau 4. Influence de la nature du catalyseur et du promoteur d'adhérence sur les propriétés d'adhérence des formulations RTV1 alcoxy**

| **Charges (% poids)** | **Contre-exemple 5** | **Contre-exemple 7** | **Contre-exemple 8** | **Contre-exemple 6** | **Exemple 5** | **Contre-exemple 9** |
|---|---|---|---|---|---|---|
| **Préparation 1** | 98,5 | 98,5 | 98,8 | 98,2 | 99,1 | 99,2 |
| **Tyzor® PITA** | | **1** | **1** | | | |
| **Tyzor® PITA SM** | **1,5** | | | | | |
| **TnBT** | | | | **1,44** | | |
| **MEMO** | | | | **0,36** | | |
| **DiCyG A(4)** | | | | | **0,3** | |
| **TMG** | | | | | | **0,3** |
| **DAMO** | | **0,5** | | | **0,5** | **0,5** |
| **AMEO** | | | **0,23** | | | |

| **Propriétés mécaniques après 7 j de réticulation à 23°C+/-2 et 50% HR +/-5** | | | | | | |
|---|---|---|---|---|---|---|
| **Dureté Shore A** | 28-30 | 21 | 23 | non mesuré | 33 | Pas de réticulation |

| **Propriétés mécaniques après traitement dans huile 5W30** | | | | | | |
|---|---|---|---|---|---|---|
| **Dureté Shore A** | 0 | 1 | 6 | non mesuré | 22 | non mesuré |

| **Propriétés de collages sur Alu AG3 pollué d'huile** | | | | | | |
|---|---|---|---|---|---|---|
| **RR (MPa)** | 0,3 | 0,2 | 0,3 | 0,6 | 0,75 | non mesuré |
| **Cohésion (%)** | 0 | 0 | 0 | 10 | 100 | non mesuré |

La formulation comprenant le catalyseur N,N-dicyclohexyl-N'-methyl-N"-butylguanidine A(4) ou DiCyG (exemple 5) associé au carbonate de calcium selon l'invention et à un polyalcoxysilane ayant au moins un groupement comprenant au moins un atome d'azote présente une dureté satisfaisante après traitement dans l'huile et une bonne adhérence sur surface polluée. Les essais réalisés en remplaçant la N,N-dicyclohexyl-N'-methyl-N"-butylguanidine A(4) par les guanidines A(1) à A(3) et A(5) à A(9) décrites précédemment présentent des résultats similaires.

Les résultats du tableau 4 montrent que les formulations contenant un catalyseur au titane (contre-exemples 5 à 8 avec Tyzor® PITA ou TnBT) permettent d'obtenir des élastomères avec des propriétés mécaniques acceptables après 7 jours de réticulation mais leur résistance à l'huile ainsi que l'adhérence sur surface polluée ne sont pas conformes à l'application souhaitée quel que soit le polyalcoxysilane utilisé (MEMO, DAMO ou AMEO)

Lorsqu'on remplace le catalyseur guanidine selon l'invention par la tetraméthylguanidine (TMG- contre-exemple 9) qui est une guanidine ayant une fonction imine non substituée c'est-à-dire de type >C=N-H l'élastomère ne réticule pas suffisamment pour pouvoir mesurer une dureté ce qui est rédhibitoire pour l'application.

## Revendications

1. Composition polyorganosiloxane **X** réticulable en élastomère en présence d'eau par des réactions de polycondensation comprenant:
A) au moins un polyorganosiloxane **A** comprenant au moins un groupement alcoxylé et constitué de motifs siloxyles identiques ou différents, de formule :
(Z)_{b}(R⁴)ₐSiO_{[4-(a+b)]/2} **(1)**
dans laquelle :
• le symbole Z = [-(OCH₂CH₂)_{c}-OR⁵], avec c=0 ou 1,
• a= 0, 1, 2 ou 3; b= 0, 1, 2 ou 3, a+b= 0, 1, 2 ou 3,
• le symbole R⁴ représente un radical monovalent hydrocarboné en C₁ à C₁₃,
• le symbole R⁵ représente un radical monovalent hydrocarboné en C₁ à C₆ ou un radical alkoxyalkyle comprenant éventuellement une fonction ester, et
• avec la condition que pour au moins un motif siloxyle l'indice b≥1 de manière à ce que le polyorganosiloxane **A** contienne au moins un groupement alcoxylé Z,
B) une quantité strictement supérieure à 35% en poids par rapport à la quantité totale de la composition d'au moins un carbonate de calcium naturel broyé **B** qui a une surface spécifique strictement inférieure à 3 m²/g, mesurée selon la méthode BET et a été traité en surface par au moins un composé choisi parmi le groupe constitué par : une paraffine, un acide gras, un sel d'un acide gras et leur mélange,
C) une quantité catalytiquement efficace d'au moins un catalyseur de condensation **C** qui est une guanidine ayant une fonction imine substituée par un atome autre que l'atome d'hydrogène répondant aux formules générale **(I)** ou **(II)** suivantes : 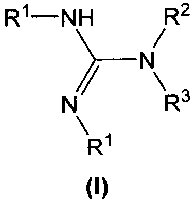 dans laquelle :
• les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
• le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine,
• le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine, et
• lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, 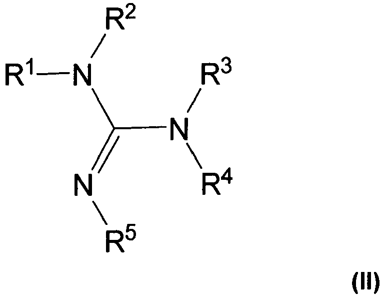
dans laquelle :
• les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine, et
• les radicaux R¹, R², R³ ou R⁴ peuvent être liés deux à deux de manière à former un cycle aliphatique à 3, 4, 5, 6 ou 7 chaînons éventuellement substitué par un ou plusieurs substituants,
D) au moins un polyalcoxysilane **D** ayant au moins un groupement comprenant au moins un atome d'azote,
E) éventuellement au moins une charge **E** autre que ledit carbonate de calcium naturel broyé **B**,
F) éventuellement au moins un additif **F** tel qu'une base colorante, un pigment ou un agent thixotropant, et
avec la condition supplémentaire que ladite composition polyorganosiloxane **X** ne contient pas de noir d'acétylène.

2. Composition polyorganosiloxane **X** selon la revendication 1 **caractérisée en ce que** le carbonate de calcium naturel broyé **B** a une surface spécifique strictement inférieure à 3 m²/g, mesurée selon la méthode BET et a été traité en surface par au moins un acide gras contenant de 10 à 24 atomes de carbone ou son sel respectif choisi parmi les sels de calcium, magnésium, zinc ou leur mélange et de préférence a été traité en surface par un acide stéarique ou son sel respectif de calcium, magnésium ou zinc.

3. Composition polyorganosiloxane **X** selon la revendication 1 dans laquelle le polyorganosiloxane réticulable **A** est linéaire et a pour formule développée: 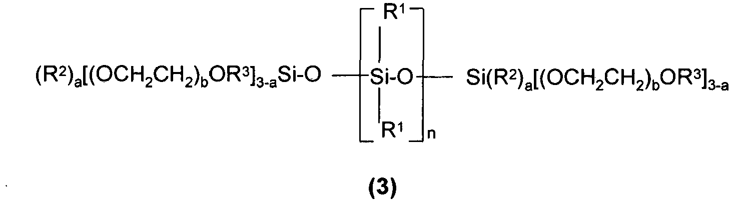 dans laquelle :
• les substituants R¹, identiques ou différents, représentent chacun un radical monovalent hydrocarboné saturé ou non en C₁ à C₁₃, substitué ou non substitué, aliphatique, cyclanique ou aromatique ;
• les substituants R², identiques ou différents, représentent chacun un radical monovalent hydrocarboné saturé ou non en C₁ à C₁₃, substitué ou non substitué, aliphatique, cyclanique ou aromatique ;
• les substituants R³, identiques ou différents, représentent chacun un radical alkyle, linéaire ou ramifié, en C₁ à C₆ ;
• n a une valeur suffisante pour conférer au polyorganopolysiloxane de formule A une viscosité dynamique à 25°C allant de 1.000 à 1.000.000 mPa.s ; et
• l'indice a est égal à zéro ou 1 et l'indice b est égal à zéro ou 1 ;

4. Composition polyorganosiloxane **X** selon la revendication 1 dans laquelle le polyorganosiloxane **A** comprenant au moins un groupement alcoxylé est obtenu en faisant réagir, éventuellement in-situ, en présence d'une quantité catalytiquement efficace d'au moins un catalyseur **G** de fonctionnalisation:
a) au moins un polyorganosiloxane **A'** comprenant des motifs siloxyles de formule :
(R¹)ₓ(OH)_{y}SiO_{(4-x-y)//2} **(4)**
dans laquelle :
- x+y= 0, 1, 2 ou 3 ;
- les substituants R¹, identiques ou différents, représentent chacun un radical monovalent hydrocarboné en C₁ à C₁₃ et choisi parmi le groupe constitué par les radicaux alkyles, cycloalkyles, aryles, alkaryles et aralkyles, et
- au moins deux motifs siloxyles comprenant un groupement ≡SiOH sont présents dans le polyorganosiloxane **A'**, avec
b) au moins un silane polyalcoxylé **H** de formule :
(R²)_{z}Si(OR³)_{(4-z)} **(5)**
dans laquelle :
- z = 0 ou 1,
- le symbole R² représente un radical monovalent hydrocarboné en C₁ à C₁₃, et
- les symboles R³, identiques ou différents, représentent chacun un radical monovalent hydrocarboné en C₁ à C₆ ou un radical alkoxyalkyle présentant éventuellement une fonction ester.

5. Composition polyorganosiloxane **X** selon la revendication 4 dans laquelle le catalyseur **G** de fonctionnalisation est la lithine ou la potasse.

6. Elastomère obtenu par réticulation en présence d'eau de la composition polyorganosiloxane **X** telle que définie selon l'une quelconque des revendications précédentes.

7. Utilisation de la composition polyorganosiloxane **X** telle que définie selon l'une quelconque des revendications 1 à 5 ou de l'élastomère tel que défini selon la revendication 6 pour préparer des joints silicones d'étanchéité ayant une bonne adhérence sur des surfaces polluées par des huiles d'un groupe motopropulseur.

8. Procédé d'étanchéification et d'assemblage d'au moins un composant d'un groupe moto-propulseur comprenant les étapes a) à d) suivantes:
a) on prépare une composition polyorganosiloxane **X** telle que définie selon l'une quelconque des revendications 1 à 5,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité, et
d) on assemble ledit composant à un autre composant du groupe moto-propulseur de manière à ce que le joint formé assure l'assemblage et l'étanchéité entre les deux composants du groupe moto-propulseur.

## Patentansprüche

1. Polyorganosiloxanzusammensetzung **X**, die durch Polykondensationsreaktionen in Gegenwart von Wasser zu einem Elastomer vernetzbar ist, umfassend:
A) mindestens ein Polyorganosiloxan **A**, das mindestens eine Alkoxygruppe umfasst und aus gleichen oder verschiedenen Siloxyleinheiten der Formel:
(Z)_{b}(R⁴)ₐSiO_{[4-(a+b)]/2} **(1)**
besteht, wobei:
• das Symbol Z = [-(OCH₂CH₂)_{c}-OR⁵] mit c = 0 oder 1,
• a = 0, 1, 2 oder 3, b = 0, 1, 2 oder 3, a + b = 0, 1, 2 oder 3,
• das Symbol R⁴ für einen einwertigen C₁- bis C₁₃-Kohlenwasserstoffrest steht,
• das Symbol R⁵ für einen einwertigen C₁- bis C₆-Kohlenwasserstoffrest oder einen Alkoxyalkylrest, der gegebenenfalls eine Esterfunktion umfasst, steht, und
• mit der Maßgabe, dass für mindestens eine Siloxyleinheit der Index b ≥ 1, so dass das Polyorganosiloxan **A** mindestens eine Alkoxygruppe Z umfasst,
B) eine Menge von strikt mehr als 35 Gew.-%, bezogen auf die Gesamtmenge der Zusammensetzung, mindestens eines gemahlenen natürlichen Calciumcarbonats **B**, das eine gemäß der BET-Methode gemessene spezifische Oberfläche von strikt weniger als 3 m²/g aufweist und mit mindestens einer Verbindung aus der Gruppe bestehend aus einem Paraffin, einer Fettsäure, einem Salz einer Fettsäure und einer Mischung davon oberflächenbehandelt worden ist,
C) eine katalytisch wirksame Menge mindestens eines Kondensationskatalysators **C**, bei dem es sich um ein Guanidin mit einer Iminfunktion, die durch ein von einem Wasserstoffatom verschiedenes Atom substituiert ist, handelt, das den folgenden allgemeinen Formeln **(I)** oder **(II)** entspricht: 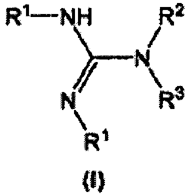 wobei:
• die Reste R¹ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, stehen;
• der Rest R² für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine aromatische Gruppe, eine Arylalkylgruppe, eine Fluoralkylgruppe, eine Alkylamingruppe oder eine Alkylguanidingruppe steht;
• der Rest R³ für eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe oder eine Alkylguanidingruppe steht; und
• dann, wenn der Rest R² nicht für ein Wasserstoffatom steht, die Reste R² und R³ zu einem 3-, 4-, 5-, 6- oder 7-gliedrigen aliphatischen Ring, der gegebenenfalls durch einen oder mehrere Substituenten substituiert ist, verbunden sein können, 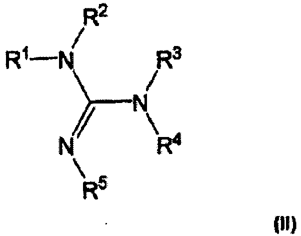
wobei
• die Reste R¹, R², R³, R⁴ oder R⁵ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, eine aromatische Gruppe, eine Arylalkylgruppe, eine Fluoralkylgruppe, eine Alkylamingruppe oder eine Alkylguanidingruppe stehen und
• die Reste R¹, R², R³ oder R⁴ paarweise so verbunden sein können, dass sie einen 3-, 4-, 5-, 6- oder 7-gliedrigen aliphatischen Ring bilden, der gegebenenfalls durch einen oder mehrere Substituenten substituiert ist,
D) mindestens ein Polyalkoxysilan **D** mit mindestens einer Gruppe, die mindestens ein Stickstoffatom enthält,
E) gegebenenfalls mindestens einen Füllstoff **E**, der von dem gemahlenen natürlichen Calciumcarbonat **B** verschieden ist,
F) gegebenenfalls mindestens ein Additiv **F**, wie eine Farbbasis, ein Pigment oder ein Thixotropiermittel, und
mit der zusätzlichen Maßgabe, dass die Polyorganosiloxanzusammensetzung **X** keinen Acetylenruß umfasst.

2. Polyorganosiloxanzusammensetzung **X** nach Anspruch 1, **dadurch gekennzeichnet, dass** das gemahlene natürliche Calciumcarbonat **B** eine gemäß der BET-Methode gemessene spezifische Oberfläche von strikt weniger als 3 m²/g aufweist und mit mindestens einer Fettsäure mit 10 bis 24 Kohlenstoffatomen oder deren jeweiligem Salz, das aus den Calcium-, Magnesium- oder Zinksalzen ausgewählt ist, oder einer Mischung davon oberflächenbehandelt worden ist und vorzugsweise mit einer Stearinsäure oder deren jeweiligem Calcium-, Magnesium- oder Zinksalz oberflächenbehandelt worden ist.

3. Polyorganosiloxanzusammensetzung **X** nach Anspruch 1, wobei das vernetzbare Polyorganosiloxan **A** linear ist und die Strukturformel: 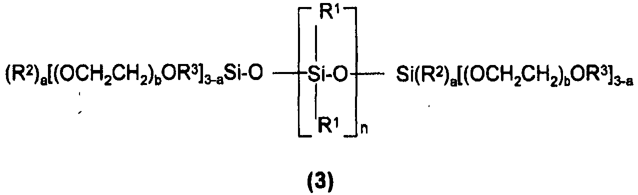 aufweist, wobei:
• die Substituenten R¹ gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen;
• die Substituenten R² gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen;
• die Substituenten R³ gleich oder verschieden sind und jeweils für einen linearen oder verzweigten C₁- bis C₆-Alkylrest stehen;
• n einen Wert hat, der ausreicht, um dem Polyorganopolysiloxan der Formel A eine dynamische Viskosität bei 25°C im Bereich von 1000 bis 1.000.000 mPa.s zu verleihen; und
• der Index a gleich null oder 1 ist und der Index b gleich null oder 1 ist.

4. Polyorganosiloxanzusammensetzung **X** nach Anspruch 1, wobei das Polyorganosiloxan **A**, das mindestens eine Alkoxygruppe umfasst, dadurch erhalten wird, dass man gegebenenfalls in situ in Gegenwart einer katalytisch wirksamen Menge mindestens eines Funktionalisierungskatalysators **G**:
a) mindestens ein Polyorganosiloxan **A**', das Siloxyleinheiten der Formel:
(R¹)ₓ(OH)_{y}SiO_{(4-x-y)//2} **(4)**
umfasst, wobei:
- x + y = 0, 1, 2 oder 3,
- die Substituenten R¹ gleich oder verschieden sind und jeweils für einen einwertigen C₁- bis C₁₃-Kohlenwasserstoffrest, der aus der Gruppe bestehend aus Alkyl-, Cycloalkyl-, Aryl-, Alkaryl- und Aralkylresten ausgewählt ist, stehen und
- in dem Polyorganosiloxan **A**' mindestens zwei Siloxyleinheiten, die eine ≡SiOH-Gruppe umfassen, vorliegen, mit
b) mindestens einem Polyalkoxysilan **H** der Formel:
(R²)_{z}Si(OR³)_{(4-z)} **(5)**
wobei:
- z = 0 oder 1,
- das Symbol R² für einen einwertigen C₁- bis C₁₃-Kohlenwasserstoffrest steht und
- die Symbole R³ gleich oder verschieden sind und jeweils für einen einwertigen C₁- bis C₆-Kohlenwasserstoffrest oder einen Alkoxyalkylrest, der gegebenenfalls eine Esterfunktion umfasst, stehen,
umsetzt.

5. Polyorganosiloxanzusammensetzung **X** nach Anspruch 4, wobei es sich bei dem Funktionalisierungskatalysator **G** um Lithiumhydroxid oder Kaliumhydroxid handelt.

6. Elastomer, erhalten durch Vernetzung der Polyorganosiloxanzusammensetzung **X** gemäß einem der vorhergehenden Ansprüche in Gegenwart von Wasser.

7. Verwendung der Polyorganosiloxanzusammensetzung **X** gemäß einem der Ansprüche 1 bis 5 oder des Elastomers gemäß Anspruch 6 zur Herstellung von Silikondichtungen mit guter Haftung auf mit Ölen verunreinigten Oberflächen einer Antriebsgruppe.

8. Verfahren zum Abdichten und Montieren mindestens eines Bauteils einer Antriebsgruppe mit den folgenden Schritten a) bis d):
a) man stellt eine Polyorganosiloxanzusammensetzung **X** gemäß einem der Ansprüche 1 bis 5 her,
b) man bringt die Polyorganosiloxanzusammensetzung **X** kontinuierlich oder diskontinuierlich und gegebenenfalls in Form einer Raupe auf mindestens eine Kontaktzone des Bauteils auf,
c) man lässt die Polyorganosiloxanzusammensetzung **X** in Gegenwart von Feuchtigkeit, die durch die Umgebungsluft oder durch vorherige Zugabe von Wasser bereitgestellt wird, zu einem Silikonelastomer vernetzen, wobei man eine Dichtung erhält, und
d) man montiert das Bauteil so auf ein anderes Bauteil der Antriebsgruppe, dass die gebildete Dichtung die Montage und Abdichtung zwischen den beiden Bauteilen der Antriebsgruppe gewährleistet.

## Claims

1. Polyorganosiloxane composition **X** which can be crosslinked to give an elastomer in the presence of water via polycondensation reactions, comprising:
A) at least one polyorganosiloxane **A** comprising at least one alkoxylated group and composed of identical or different siloxyl units, of formula:
**(Z)_{b}(R⁴)ₐSiO_{[4-(a+b)]/2}** **(1)**
in which:
• the symbol Z = [-(OCH₂CH₂)_{c}-OR⁵], with c=0 or 1,
• a = 0, 1, 2 or 3; b = 0, 1, 2 or 3, a+b = 0, 1, 2 or 3,
• the symbol R⁴ represents a monovalent C₁ to C₁₃ hydrocarbon-based radical,
• the symbol R⁵ represents a monovalent C₁ to C₆ hydrocarbon-based radical or an alkoxyalkyl radical optionally comprising an ester function, and
• with the condition that, for at least one siloxyl unit, the index b≥1, such that the polyorganosiloxane **A** contains at least one alkoxylated group Z,
B) an amount strictly greater than 35% by weight, relative to the total amount of the composition, of at least one ground natural calcium carbonate **B** which has a specific surface area strictly less than 3 m²/g, measured according to the BET method, and which has been surface-treated with at least one compound chosen from the group consisting of: a paraffin, a fatty acid, a fatty acid salt, and a mixture thereof,
C) a catalytically effective amount of at least one condensation catalyst **C** which is a guanidine that has an imine function substituted with an atom other than a hydrogen atom corresponding to the general formulae **(I)** or **(II)** below: 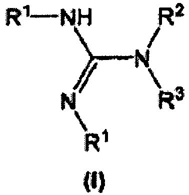 in which:
• the R¹ radicals, which may be identical or different, represent, independently of one another, a linear or branched monovalent alkyl group, a cycloalkyl group, a (cycloalkyl)alkyl group, the ring being substituted or unsubstituted and possibly comprising at least one heteroatom, or a fluoroalkyl group,
• the R² radical represents a hydrogen atom, a linear or branched monovalent alkyl group, a cycloalkyl group, an alkyl group substituted with a ring, which is substituted or unsubstituted and which can comprise at least one heteroatom, an aromatic group, an arylalkyl group, a fluoroalkyl group, an alkylamine group or an alkylguanidine group, and
• the R³ radical represents a linear or branched monovalent alkyl group, a cycloalkyl group, an alkyl group substituted with a ring, which is substituted or unsubstituted and which can comprise at least one heteroatom, or an arylalkyl, fluoroalkyl, alkylamine or alkylguanidine group, and
• when the R² radical is not a hydrogen atom, the R² and R³ radicals can be linked up to form a 3-, 4-, 5-, 6- or 7-membered aliphatic ring optionally substituted with one or more substituents, 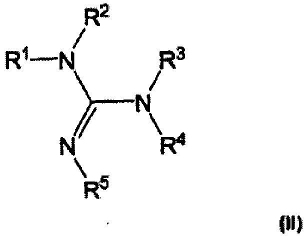
in which:
• the R¹, R², R³, R⁴ or R⁵ radicals, which may be identical or different, represent, independent of one another, a linear or branched monovalent alkyl group, a cycloalkyl group, a (cycloalkyl)alkyl group, the ring being substituted or unsubstituted and possibly comprising at least one heteroatom or a fluoroalkyl group, an aromatic group, an arylalkyl group, a fluoroalkyl group, an alkylamine group or an alkylguanidine group, and
• the R¹, R², R³ or R⁴ radicals can be linked up in pairs so as to form a 3-, 4-, 5-, 6- or 7-membered aliphatic ring optionally substituted with one or more substituents
D) at least one polyalkoxysilane **D** that has at least one group comprising at least one nitrogen atom,
E) optionally at least one filler **E** other than said ground natural calcium carbonate **B**,
F) optionally at least one additive **F**, such as a coloring base, a pigment or a thixotropic agent, and
with the additional condition that said polyorganosiloxane composition **X** does not contain acetylene black.

2. Polyorganosiloxane composition **X** according to Claim 1, **characterized in that** the ground natural calcium carbonate **B** has a specific surface area strictly less than 3 m²/g, measured according to the BET method, and has been surface-treated with at least one fatty acid containing from 10 to 24 carbon atoms or its respective salt chosen from the calcium, magnesium or zinc salts, of a mixture thereof, and has preferably been surface-treated with stearic acid or its respective calcium, magnesium or zinc salt.

3. Polyorganosiloxane composition **X** according to Claim 1, wherein the crosslinkable polyorganosiloxane **A** is linear and has the expanded formula: 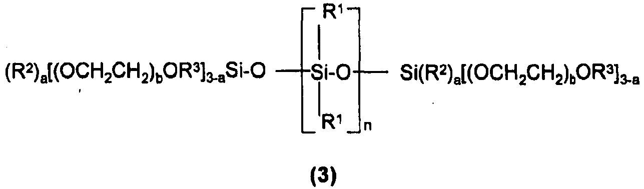 in which:
• the substituents R¹, which may be identical or different, each represent a saturated or unsaturated monovalent C₁ to C₁₃ hydrocarbon-based radical which is substituted or unsubstituted and aliphatic, cyclanic or aromatic;
• the substituents R², which may be identical or different, each represent a saturated or unsaturated monovalent C₁ to C₁₃ hydrocarbon-based radical which is substituted or unsubstituted and aliphatic, cyclanic or aromatic;
• the substituents R³, which may be identical or different, each represent a linear or branched C₁ to C₆ alkyl radical;
• n has a value sufficient to confer, on the polyorganopolysiloxane of formula A, a dynamic viscosity at 25°C ranging from 1 000 to 1 000 000 mPa.s; and
• the index a is equal to zero or 1 and the index b is equal to zero or 1.

4. Polyorganosiloxane composition **X** according to Claim 1, wherein the polyorganosiloxane **A** comprising at least one alkoxylated group is obtained by reacting, optionally in situ, in the presence of a catalytically effective amount of at least one functionalization catalyst **G**:
a) at least one polyorganosiloxane **A**' comprising siloxyl units of formula:
**(R¹)ₓ(OH)_{y}SiO_{(4-x-y)//2}** **(4)**
in which:
- x+y = 0, 1, 2 or 3;
- the substituents R¹, which can be identical or different, each represent a monovalent C₁ to C₁₃ hydrocarbon-based radical chosen from the group consisting of alkyl, cycloalkyl, aryl, alkaryl and aralkyl radicals, and
- at least two siloxyl units comprising an ≡SiOH group are present in the polyorganosiloxane **A**', with
b) at least one polyalkoxylated silane **H** of formula:
**(R²)_{z}Si(OR³)_{(4-z)}** **(5)**
in which:
- z = 0 or 1,
- the symbol R² represents a monovalent C₁ to C₁₃ hydrocarbon-based radical, and
- the symbols R³ which may be identical or different, each represent a monovalent C₁ to C₆ hydrocarbon-based radical or an alkoxyalkyl radical optionally having an ester function.

5. Polyorganosiloxane composition **X** according to Claim 4, wherein the functionalization catalyst **G** is lithium hydroxide or potassium hydroxide.

6. Elastomer obtained by crosslinking, in the presence of water, of the polyorganosiloxane composition **X** as defined in any one of the preceding claims.

7. Use of the polyorganosiloxane composition **X** as defined in any one of Claims 1 to 5 or of the elastomer as defined in Claim 6 for preparing silicone gaskets having good adhesion on surfaces contaminated with oils of a power train.

8. Process for sealing and assembling at least one component of a power train, comprising the following steps a) to d):
a) a polyorganosiloxane composition **X** as defined in any one of Claims 1 to 5 is prepared,
b) said polyorganosiloxane composition **X** is applied to at least one contact region of said component, continuously or noncontinuously and optionally in the form of a bead,
c) said polyorganosiloxane composition **X** is allowed to crosslink to form a silicone elastomer in the presence of moisture provided by the ambient air or by prior addition of water, so as to form a gasket, and
d) said component is assembled with another component of the power train such that the seal formed provides for the assembly and the sealing between the two components of the power train.
